# EUROPÄISCHE PATENTANMELDUNG

(11) **EP 4 130 903 A1**
(43) Veröffentlichungstag der Anmeldung: **08.02.2023**
(21) Anmeldenummer: 22188114.7
(22) Anmeldetag: 01.08.2022
(51) Int. Cl.: G05B 19/4065, G05B 23/02

(54) **ÜBERWACHUNGSVORRICHTUNG UND ÜBERWACHUNGSVERFAHREN ZUR ERFASSUNG EINES DIAGNOSEZUSTANDS**

(30) Priorität: 02.08.2021 DE 102021119985
(71) Anmelder: Prüftechnik Dieter Busch GmbH, 85737 Ismaning (DE)
(72) Erfinder: BRUNN, Dietrich, 79286 Glottertal (DE); GERMER, Jan, 79286 Glottertal (DE)
(74) Vertreter: HGF

(57) **Zusammenfassung**

Die Erfindung betrifft ein Verfahren zur Überwachung des Diagnosezustands einer Maschine (2) und eine Überwachungsvorrichtung (1) zur Erfassung eines Diagnosezustands einer industriellen Maschine (2) anhand von Schwingungen oder Vibrationen, mit zumindest einen Messwertaufnehmer (3) zur Erfassung von einem ersten Signal (S1) und zumindest von einem zweiten Signal (S2) in einem Zeitbereich, wobei der zumindest eine Messwertaufnehmer (3) zumindest eine Signalaufbereitung (4) aufweist zur Auswertung des ersten Signals (S1) als einen ersten Kennwert (K1) und des zumindest zweiten Signals (S2) als einen zweiten Kennwert (K2) und wobei der eine erste Kennwert (K1) und der zumindest zweite Kennwert (K2) einen Kennwerttupel bilden, und eine Speichereinheit, in welcher verschiedene Diagnosezustände gespeichert sind, welche in Abhängigkeit von dem Kennwerttupel festgelegt sind. Zur Überwachung des Diagnosezustands werden zumindest zwei Kennwerte (K1,K2) aus den gemessenen Signalen (S1,S2) ausgewertet, wobei die Diagnosezustände anhand der Kennwerte (K1,K2) festgelegt sind, wobei unterschiedliche Diagnosepartitionen (D1,D2,D3,D4) unterschiedliche Diagnosezustände der industriellen Maschine (2) darstellen, und wobei ein Grenzpotential (G1,G2,G3) einen Wechsel des Diagnosezustandes bzw. Diagnosepartition charakterisiert.

## Beschreibung

Die Erfindung betrifft eine Überwachungsvorrichtung zur Erfassung eines Diagnosezustands einer industriellen Maschine anhand von Schwingungen, die der industriellen Maschine zugeordnet sind sowie ein Überwachungsverfahren.

Schwingungsüberwachungen von industriellen Maschinen, wie Wälzlagern, Lagern, Getriebe oder im Allgemeinen rotierenden und nicht rotierenden Maschinen werden durchgeführt, um einen Diagnosezustand der Maschine zu erhalten. Dabei sollen vor allem alarmierende Diagnosezustände rechtzeitig erkannt werden, um beispielsweise Abhilfemaßnahmen zu ergreifen, bevor die Funktion der Maschine beeinträchtigt wird oder dauerhafte Schäden an der Maschine oder eine Reduktion in der Lebensdauer anfallen.

Hierzu werden derzeit zum Überwachen von Maschinen in der Regel eindimensionale Kennwerte mit kontinuierlichem Wertebereich herangezogen. Diese Kennwerte werden in regelmäßigen Abständen erhoben und als Zeitreihe betrachtet. Für diese Größen existieren je nach Maschinentyp feste oder adaptierbare Grenzwerte, deren Überschreitung eine Warnung oder einen Alarm auslösen kann. Zudem erlauben Zeitreihen ein einfaches Unterscheiden zwischen Trends und sporadischen Ereignissen ohne dauerhafte Auswirkung.

Jedoch gibt es Maschinenzustände, welche lediglich durch ein gleichzeitiges Betrachten von zwei oder mehr Kennwerten überwacht werden können. Durch eine Betrachtung eines einzelnen Kennwerts ist eine genaue bzw. hinreichende Überwachung dieser industriellen Maschinen bzw. deren Bauteile nicht möglich.

Aus der WO 2017/167616 A1 sind ein Verfahren sowie eine Vorrichtung zur Durchführung eines Verfahrens zur schwingungsdiagnostischen Überwachung und Beurteilung von einzelnen Maschinenteilen einer Maschine, vorzugsweise einer drehenden Maschine, unter Verwendung eines Frequenzanalysators bekannt.

Es ist wünschenswert, eine verbesserte Überwachungsvorrichtung und ein verbessertes Überwachungsverfahren anzugeben.

Dementsprechend stellt ein Aspekt der vorliegenden Erfindung eine Überwachungsvorrichtung bereit, zur Erfassung eines Diagnosezustands einer industriellen Maschine anhand von Schwingungen, die der industriellen Maschine zugeordnet sind, umfassend zumindest einen Messwertaufnehmer zur Erfassung zumindest von einem die Schwingung der industriellen Maschine charakterisierenden ersten Signal in einem Zeitbereich und zur Erfassung zumindest von einem die Schwingung der industriellen Maschine charakterisierenden zweiten Signal in demselben Zeitbereich und wobei der zumindest eine Messwertaufnehmer zumindest eine Signalaufbereitung aufweist zur Auswertung des zumindest ersten Signals als einen ersten Kennwert und zur Auswertung des zumindest zweiten Signals als einen zweiten Kennwert und wobei der zumindest eine erste Kennwert und der zumindest eine zweite Kennwert einen Kennwerttupel bilden,
ferner aufweisend eine Speichereinheit in welcher verschiedene, den Zustand der industriellen Maschine beschreibende Diagnosezustände gespeichert sind, wobei die Diagnosezustände in Abhängigkeit von dem Kennwerttupel festgelegt sind, sowie ein vorab definierter Skalarbereich gespeichert ist mit vorab festgelegten unterschiedlichen festen Skalarwerten, welche jeweils ein vorhandenes Grenzpotential definieren, wobei jeweils ein Grenzpotential einen Wechsel des Diagnosezustandes charakterisiert, und wobei zwischen benachbarten Grenzpotentialen eine Diagnosepartition ausgebildet ist, und wobei den unterschiedlichen Diagnosepartitionen unterschiedliche Skalarwerte aus dem Skalarbereich zugeordnet sind, und wobei jeweils unterschiedliche Diagnosepartitionen unterschiedliche Diagnosezustände der industriellen Maschine darstellen, und wobei die Überwachungsvorrichtung zumindest eine Interpolationsfunktion zum Abbilden des Kennwerttupels auf einen gemeinsamen eindeutigen, zeitabhängigen Skalarwert in dem vorab festgelegten Skalarbereich aufweist, so dass durch den zeitabhängigen Skalarwert eine zeitliche Überwachung des Diagnosezustandes der industriellen Maschine bewerkstelligt ist.

Unter industriellen Maschinen können in einer Ausführung alle industriellen, schwingungserzeugenden Maschinen verstanden werden. Diese können beispielsweise rotierende Elemente aufweisen. Beispiele hiervon können Pumpen, Generatoren oder Windkraftanlagen oder Komponenten wie Wälzlager sein. Weitere Beispiele: Elektromotoren, Lüfter, (Gas-) Turbinen, etc.

Nicht abschließend aufgezählt, können Messwertaufnehmer wie berührungslose Messwertaufnehmer oder seismische Messwertaufnehmer mit geeigneten Signalaufbereitungsfunktionen umfasst sein oder piezoelektrische Schwingungsaufnehmer.

In einer Ausführung können die Messwertaufnehmer als Signale eine Beschleunigung, insbesondere eine Spitzenbeschleunigung, eine Drehfrequenz, eine Effektivgeschwindigkeit, eine Schwingungsauslenkung, eine Wellenverschiebung oder im Allgemeinen eine axiale oder radiale Verschiebung sein. In weiteren Ausführungen kann eine absolute Schwingungsbewegung oder relative Bewegung gemessen werden. Weitere Signale können Temperatur, Schall oder andere physikalische Größen sein.

Als ein Kennwert kann beispielsweise die Effektivgeschwindigkeit verwendet werden, beispielsweise in Kombination mit der Effektivauslenkung oder der Beschleunigung. In einer Ausführung können Kennwerte als Mittelwerte und/oder als Effektivwerte angegeben werden.

In einer Ausführung kann die Signalaufbereitung als Prozessor mit einer geeigneten Signalauswertungsfunktion ausgebildet sein.

Ferner kann die Überwachungsvorrichtung in einer Ausführung dazu ausgebildet sein, Signale kontinuierlich aufzunehmen. In einer anderen Ausführung kann eine periodische oder sporadische Aufnahme vorgesehen sein.

Für die Abbildung des Kennwerttupels auf einen gemeinsamen eindeutigen, zeitabhängigen Skalarwert in dem vorab festgelegten Skalarbereich durch zumindest eine Interpolationsfunktion weist die Überwachungsvorrichtung übliche Rechenmodule/Prozessoren oder ähnliche Hardware auf. Die Überwachungsvorrichtung kann anhand der Rechenmodule/Prozessoren und der darauf ausgeführten zumindest einen Interpolationsfunktion die Abbildung des Kennwerttupels auf einen gemeinsamen eindeutigen, zeitabhängigen Skalarwert in dem vorab festgelegten Skalarbereich bewerkstelligen.

Unter Rechenmodule sind beispielsweise herkömmliche Rechner mit CPU, Speichereinheit, Prozessor etc. zu verstehen.

Diagnosezustände sind in einer Ausführung beispielsweise, bezüglich ihrer Kritikalität geordnet, eine Fehlmessung, ein Gutzustand oder ein Warnzustand oder ein Alarmzustand. Dabei ist ein Gutzustand ein unkritischer Zustand und ein Alarmzustand ein hochkritischer Zustand. Eine Fehlmessung lässt wenig oder keinerlei Rückschlüsse zu.

Durch die Erfindung kann die zeitliche Entwicklung von Maschinenzuständen, welche nur oder besser durch das gleichzeitige Betrachten zumindest zweier oder mehrerer Kennwerte erkannt werden kann, überwacht werden. Dadurch kann ein zeitlicher Diagnosezustand erkannt werden. Dadurch wird verhindert, dass Kennwerte kombiniert werden, welche beispielsweise zeitlich stark versetzt sind. Durch eine Abbildung der gemessenen Signale auf einen Skalarwert, kann die zeitliche Entwicklung des Diagnosezustands dargestellt werden.

In einer Ausbildung stellen jeweils angrenzende Diagnosepartitionen bezüglich der Kritikalität aufeinanderfolgende Diagnosezustände der industriellen Maschine dar.

In einer Ausführung sind die aufeinanderfolgenden Diagnosezustände zumindest in aufsteigender Reihenfolge als eine Fehlmessung, ein Gutzustand, ein Warnzustand und ein Alarmzustand ausgebildet. Dabei können in einer weiteren Ausbildung die Werte der zeitabhängigen Skalarwerte bezüglich der Kritikalität der Zustandsreihenfolge zunehmen.

In einer weiteren Ausbildung grenzen jeweils nur zwei unterschiedliche Diagnosepartitionen aneinander. Dadurch kann verhindert werden, dass ein Skalarwert an mehr als zwei Diagnosepartitionen aneinandergrenzt.

In einer Ausführung sind in der Speichereinheit die verschiedenen, aufeinanderfolgenden Diagnosezustände in Abhängigkeit von dem Kennwerttupel festgelegt.

Dabei kann in weiterer Ausbildung die Überwachungsvorrichtung ferner dazu ausgebildet sein, bei Vorliegen von zumindest einem Kennwerttupel, der einem Wechsel zwischen den Diagnosezuständen entspricht, den Kennwerttupel auf den entsprechenden, das zu dem Wechsel des Diagnosezustands gehörenden Grenzpotential eindeutigen Skalarwert abzubilden. Dies bedeutet, dass die Interpolationsfunktion als eine einfache Abbildungsfunktion dargestellt werden kann. Der Skalarwert ist in dieser Ausbildung der Skalarwert des zugehörigen Grenzpotentials.

In einer Ausbildung sind jeweils einer Diagnosepartition mehrere Potentiale mit dazwischenliegenden Teilpartitionen zugeordnet, wobei jeweils ein Potential einem vorab festgelegten Skalarwert eindeutig zugeordnet ist und wobei die Überwachungsvorrichtung dazu ausgebildet ist, bei Vorliegen von zumindest einem Kennwerttupel, der einen Wechsel zwischen den Teilpartitionen angibt, den Kennwerttupel auf den entsprechenden zu dem Wechsel gehörenden Potential eindeutigen Skalarwert abzubilden.

In einer weiteren Ausbildung weist die Überwachungsvorrichtung mehrere Interpolationsfunktionen auf und ist ferner dazu ausgebildet, die Interpolationsfunktion in Abhängigkeit von dem Kennwerttupel zu wählen. Insbesondere kann die Interpolationsfunktion in Abhängigkeit von vorhandenen Diagnosepartitionen und vorhandenen Teilpartitionen gewählt werden.

In einer Ausführung sind die Interpolationsfunktionen den verschiedenen Diagnosepartitionen zugeordnet, wobei die Überwachungsvorrichtung ferner dazu ausgebildet ist, bei Vorliegen von zumindest einem Kennwerttupel, welcher innerhalb einer der Diagnosepartitionen liegt, das Kennwerttupel durch die der Diagnosepartition zugeordnete Interpolationsfunktion auf den eindeutigen Skalarwert abzubilden.

Auch können in einer Ausbildung die Interpolationsfunktionen den verschiedenen Teilpartitionen zugeordnet werden, wobei die Überwachungsvorrichtung ferner dazu ausgebildet ist, bei Vorliegen von zumindest einem Kennwerttupel, welcher innerhalb einer der Teilpartitionen liegt, das Kennwerttupel durch die der Teilpartition zugeordnete Interpolationsfunktion auf den eindeutigen Skalarwert abzubilden.

Ferner kann in einer Ausbildung die Interpolationsfunktion innerhalb der Teilpartitionen keine Extrema aufweisen. In einer anderen Ausbildung kann das Kennwerttupel, welches innerhalb einer der Teilpartitionen liegt, immer auf denselben Skalarwert abgebildet werden.

In einer Ausbildungsform ist eine Aggregiereinheit vorgesehen zum Aggregieren des während des vorab definierten Zeitbereich ermittelten ersten und zweiten Kennwerts als Kennwerttupel und Koppeln des Kennwerttupels an den Zeitbereich. Die Aggregiereinheit kann beispielsweise warten, bis jeder Messwertaufnehmer einen Signalwert und den dazu gehörenden Kennwert geliefert hat, und diese dann aggregiert als Kennwerttupel; versehen mit dem Zeitbereich als Zeitstempel, koppeln.

Auch kann nur ein Messwertaufnehmer mehrere Signale und Kennwerte liefern und die Aggregiereinheit kann dazu ausgebildet sein, diese als Kennwerttupel; versehen mit dem Zeitbereich als Zeitstempel zu koppeln. Dabei kann beispielsweise je nach Kennwert die Zeitdauer zwischen den Signalen und den berechneten Kennwerten signifikant unterschiedlich sein, aufgrund beispielsweise unterschiedlicher Einschwingdauern und unterschiedlicher Länge der Aufnahmeintervalle.

In einer Ausführungsform ist der zumindest eine Messwertaufnehmer dazu ausgebildet, periodisch zumindest ein erstes Signal und ein zweites Signal zu aufeinanderfolgenden Zeitbereichen zu erzeugen.

In einer Ausgestaltung kann eine Triggereinheit vorgesehen sein, welche den zumindest einen Messwertaufnehmer triggert, um zumindest das erste Signal und das zumindest zweite Signal in aufeinanderfolgenden Zeitbereichen zu erzeugen. Die Triggereinheit löst somit beispielsweise das Erzeugen von Signalen auf den vorhandenen einen oder mehreren verschiedenen Messwertaufnehmern aus.

In einer weiteren Ausgestaltung ist die Überwachungsvorrichtung dazu ausgebildet, die in aufeinanderfolgenden Zeitbereichen erzeugten zeitabhängigen Skalarwerte als zeitlichen Verlauf mit den zumindest Grenzpotentialen auszugeben. Dies kann beispielsweise in einer Ausführungsform als Scatterplot -Diagramm (Streudiagramm) vorgenommen werden.

In einer Ausbildung ist der zumindest eine Messwertaufnehmer ein piezoelektrischer Schwingungsaufnehmer. In einer Ausbildung ist dieser in der Lage, Beschleunigungen, typischerweise in der Größenordnung von 0.1 m/ s2 bis 1000 m/s2, in einem Frequenzbereich von 0.1 Hz bis 25 kHz zu messen.

In einer Ausführung sind mehrere Messwertaufnehmer mit jeweils einer Signalaufbereitung vorgesehen zur Erfassung zumindest von einem die Schwingung der industriellen Maschine charakterisierenden ersten und zweiten Signal.

In einer Ausbildung ist der zumindest ein Messwertaufnehmer zur Erfassung von einem die Schwingung der industriellen Maschine charakterisierenden ersten und zweiten Signal sowie zur Erfassung von weiteren, die Schwingung der industriellen Maschine charakterisierenden Signalen und zur Auswertung in mehrere Kennwerte ausgebildet.

Ferner wird in einem Aspekt ein Überwachungsverfahren zur Erfassung eines Diagnosezustands einer industriellen Maschine anhand von Schwingungen, die der industriellen Maschine zugeordnet sind, bereit gestellt, wobei zumindest ein Messwertaufnehmer zur Erfassung zumindest von einem die Schwingung der industriellen Maschine charakterisierenden ersten Signal in einem Zeitbereich und zur Erfassung zumindest von einem die Schwingung der industriellen Maschine charakterisierenden zweiten Signal in demselben Zeitbereich bereitgestellt wird und wobei der zumindest eine Messwertaufnehmer zumindest eine Signalaufbereitung aufweist zur Auswertung des zumindest ersten Signals als einen ersten Kennwert und zur Auswertung des zumindest zweiten Signals als einen zweiten Kennwert und wobei der zumindest eine erste Kennwert und der zumindest eine zweite Kennwert einen Kennwerttupel bilden,
wobei ferner eine Speichereinheit bereitgestellt wird, in welcher verschiedene, den Zustand der industriellen Maschine beschreibende, Diagnosezustände gespeichert sind, wobei die Diagnosezustände in Abhängigkeit von dem Kennwerttupel festgelegt sind, sowie ein vorab definierter Skalarbereich gespeichert ist mit vorab festgelegten unterschiedlichen festen Skalarwerten, welche jeweils ein vorhandenes Grenzpotential definieren, wobei jeweils ein Grenzpotential einen Wechsel des Diagnosezustandes charakterisiert, und wobei zwischen benachbarten Grenzpotentialen eine Diagnosepartition ausgebildet ist und wobei den unterschiedlichen Diagnosepartitionen unterschiedliche Skalarwerte aus dem Skalarbereich zugeordnet sind und wobei jeweils unterschiedliche Diagnosepartitionen unterschiedliche Diagnosezustände der industriellen Maschine darstellen und wobei anhand zumindest einer Interpolationsfunktion ein Abbilden des Kennwerttupels auf einen gemeinsamen eindeutigen, zeitabhängigen Skalarwert in dem vorab festgelegten Skalarbereich bewerkstelligt wird, so dass durch den zeitabhängigen Skalarwert eine zeitliche Überwachung des Diagnosezustandes der industriellen Maschine bewerkstelligt wird.

Die Vorteile und die vorteilhaften Weiterbildungen der Überwachungsvorrichtung können auch auf das Überwachungsverfahren übertragen werden. Insbesondere kann das Überwachungsverfahren auf der wie oben beschriebenen Überwachungsvorrichtung oder deren weiteren Ausbildungen durchgeführt werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
FIG 1: eine Überwachungsvorrichtung in einer ersten Ausgestaltung,
FIG 2: beispielhaft einen Messwertaufnehmer in einer ersten Ausgestaltung,
FIG 3: schematisch die Diagnosepartition in Abhängigkeit eines Kennwerttupels,
FIG 4: eine Aggregiereinheit in einer ersten Ausgestaltung,
FIG 5: schematisch eine Abbildung von zwei Kennwerten,
FIG 6: schematisch eine Interpolationsfunktion,
FIG 7: eine weitere Ausbildung einer Überwachungseinrichtung,
FIG 8: zwei Kennwerte als zeitabhängige Skalarwerte in einem Diagramm,
FIG 9: Anwendungsmöglichkeiten eines ermittelten Skalars,
FIG 10: schematisch das Überwachungsverfahren.

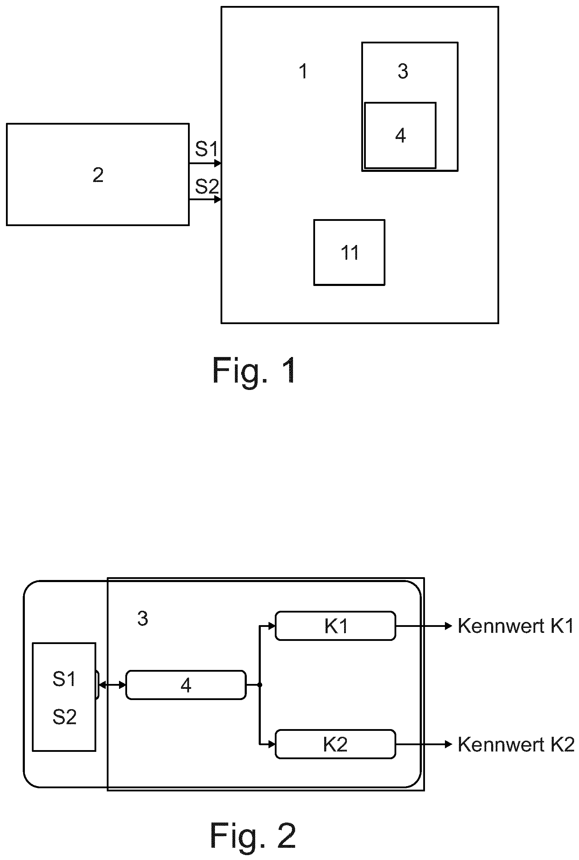

FIG 1 zeigt eine Überwachungsvorrichtung 1 zur Erfassung eines Diagnosezustandes einer industriellen Maschine 2 anhand von Schwingungen, die der industriellen Maschine 2 zugeordnet sind, durch zumindest einen Messwertaufnehmer 3, in einer ersten Ausbildung.

Die Überwachungsvorrichtung 1 kann in einer Ausführung als feste stationäre Vorrichtung an der Maschine 2 angeordnet sein. In einer anderen Ausführung kann die Überwachungsvorrichtung 1 semi-permanent installiert sein. In einer weiteren Ausführung ist die Überwachungsvorrichtung 1 als tragbares Gerät zur Anordnung und Erfassung der Schwingungen ausgebildet.

Unter industriellen Maschinen 2 können in einer Ausführung alle schwingungserzeugenden industriellen Maschinen, beispielsweise Maschinen mit rotierenden Elementen, verstanden werden. Beispiele derartiger Maschinen sind Pumpen, Generatoren oder Windkraftanlagen, Industrieanlagen oder Wälzlager.

Generell kann die Überwachungsvorrichtung 1 auf alle Arten von industriellen Maschinen 2, welche die Erfassung eines Diagnosezustandes anhand der von der industriellen Maschine 2 erzeugten Schwingungen zulässt, angewendet werden.

Nicht abschließend aufgezählt können Messwertaufnehmer 3 wie berührungslose Messwertaufnehmer oder seismische Messwertaufnehmer mit geeigneten Signalaufbereitungsfunktionen umfasst sein oder piezoelektrische Schwingungsaufnehmer, welche beispielsweise in der Lage sind, Beschleunigungen typischerweise in der Größenordnung von 0.1 m/ s2 bis 1000 m/s2 in einem Frequenzbereich von 0.1 Hz bis 25 kHz zu messen. Die Messwertaufnehmer 3 können Beschleunigungsaufnehmer, Geschwindigkeitsaufnehmer, berührungslose Sonden oder eine Kombination hiervon darstellen. Auch andere Ausgestaltungen sind möglich.

FIG 2 zeigt einen Messwertaufnehmer 3 zur Erfassung zumindest von einem die Schwingung charakterisierenden ersten Signal S1 und zweiten Signal S2 in einem vorgegebenen Zeitbereich, durch welchen ein Zeitstempel ausgebildet wird, der industriellen Maschine 2 im Detail. Ferner können in einer weiteren Ausbildung auch weitere Signale von dem Messwertaufnehmer 3 erfasst werden. Der Messwertaufnehmer 3 weist eine Signalaufbereitung 4 zur Auswertung des zumindest ersten Signals S1 als einen ersten Kennwert K1 und des zumindest zweiten Signals S2 als zweiten Kennwert K2 auf. Typische Kennwerte können Mittelwerte und der Effektivwert der Beschleunigung als quadratischen Mittelwert (root mean square) , Maximum, zero-peak-Kennwerte (0-zu-Spitze, Amplituden) für den gegebenen Zeitbereich sein. Dabei gibt Effektivwert der Beschleunigung an, welche Leistung ein Schwingungssignal aufweist und wird durch Bandpass-Filterung
(z. B. im Bereich von 10 Hz - 1 kHz) erhalten.

Ein zero-peak-Kennwert kann als Maximum des Betrags eines erfassten Signals über eine vorher festgelegte Messdauer (Zeitbereich) verstanden werden. Dieser Kennwert kann als Maß für die Spitzenhaltigkeit eines Signals verwendet werden.

Ferner können auch mehr als zwei Kennwerte vorgesehen sein. Die Kombination zwei oder mehrerer Kennwerte erlaubt eine zuverlässigere Beurteilung gegenüber der Verwendung eines einzelnen Kennwerts, insbesondere bei Maschinenzuständen, welche lediglich durch ein gleichzeitiges Betrachten von zwei oder noch mehr Kennwerten überwacht werden können.

Die erfassten Kennwerte K1, K2 können als zeitabhängige Kennwerttupel dargestellt werden.

Die Überwachungsvorrichtung 1 weist ferner eine Speichereinheit 11 auf.

In einer Ausführung kann die Speichereinheit 11 auch in den Messaufnehmer 3 integriert sein.

In der Speichereinheit 11 sind verschiedene, aufeinanderfolgende, den Zustand der industriellen Maschine 2 beschreibende, Diagnosezustände gespeichert.

Diagnosezustände können in einer Ausbildung beispielsweise als eine Fehlmessung, ein Gutzustand, ein Warnzustand und ein Alarmzustand ausgebildet sein.

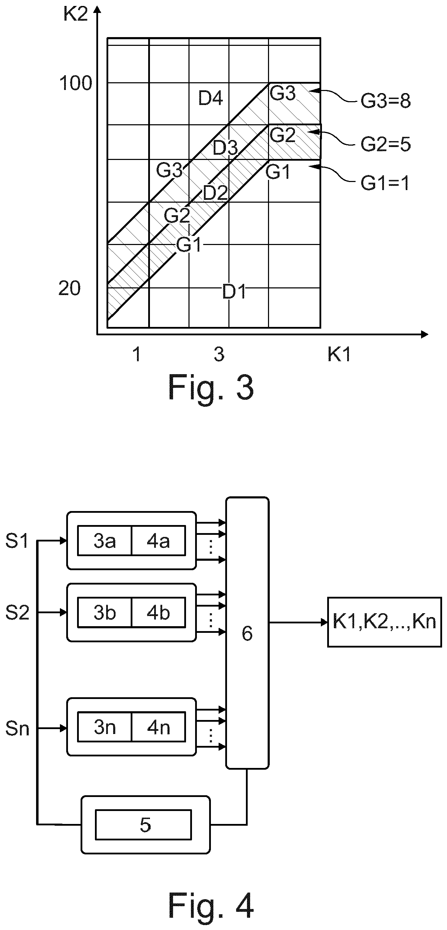

Ferner weist die Speichereinheit 11 vorab festgelegte unterschiedliche Skalarwerte auf, welche jeweils zumindest vorhandene Grenzpotentiale, in diesem Ausführungsbeispiel G1, G2, G3 (FIG 3) definieren, wobei jeweils ein Grenzpotential G1, G2, G3 einen Wechsel des Diagnosezustandes charakterisiert, wobei zwischen benachbarten Grenzpotentialen G1,...,G3 eine Diagnosepartition, in diesem Ausführungsbeispiel als Diagnosepartitionen D1,..,D4 (FIG 3), ausgebildet ist.
Es sei darauf hingewiesen, dass mehr als drei Grenzpotentiale (n- Grenzpotentiale, mit n natürlicher Zahl) und mehr als vier Diagnosepartitionen (m- Diagnosepartitionen mit m natürlicher Zahl) vorhanden sein können.

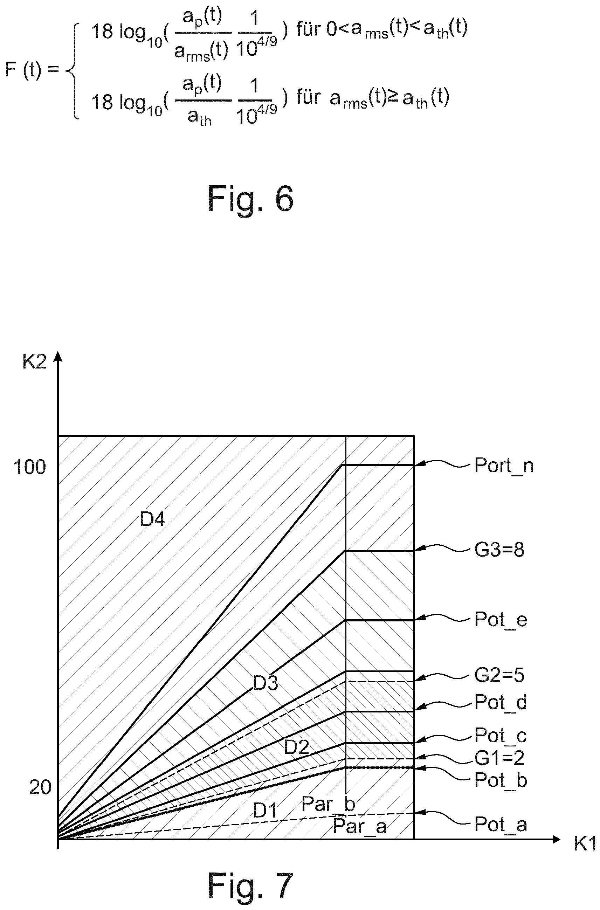

In diesem Ausführungsbeispiel sind die Diagnosepartitionen D1,D2,D3,D4 (FIG 7) den Diagnosezuständen: Fehlmessung als D1, Gutzustand als D2, Warnzustand als D3 und Alarmzustand als D4 zugeordnet. Ferner ist den Grenzpotentialen, hier G1, G2,G3, jeweils ein Skalarwert, hier beispielsweise die Skalarwerte 1, 5 und 8 zugewiesen. Es sei darauf hingewiesen, dass es sich hier um vereinfachte, die Erfindung und ihre Ausführungsbeispiele zeigende Beispiele handelt.

FIG 3 zeigt schematisch die Diagnosepartition D1,D2,D3,D4 in Abhängigkeit von dem ersten Kennwert K1 und einem zweiten Kennwert K2 sowie die Grenzpotentiale G1,G2,G3, welche beispielsweise auch als Höhenlinien angesehen werden können.

Jeder Kombination aus Kennwerten K1,K2, d.h. jedem Kennwerttupel, wird somit einer der vier Diagnosepartitionen D1,D2,D3,D4 und damit vier diskreten Diagnosezuständen oder einem der Grenzpotentiale G1,G2,G3 eindeutig zugeordnet.

Dabei kann ein Kennwerttupel zumindest zwei Kennwerte K1,K2 oder auch mehrere Kennwerttupel umfassen, welche durch ein oder mehrere Messwertaufnehmer 3a,..,3n gebildet werden können.

FIG 4 zeigt schematisch mehrere Messwertaufnehmer 3a,..,3n. Diese können als Schwingungsaufnehmer oder andere Sensoren ausgebildet sein. Jeder dieser Messwertaufnehmer 3a,..,3n erfasst eines der die Schwingung der industriellen Maschine 2 charakterisierenden Signale S1,...,Sn, die mittels entsprechender Signalaufbereitung 4a,..4n in Kennwerte K1,...,Kn umgewandelt werden. In einer anderen Ausführung können die einzelnen Messwertaufnehmer auch mehrere Signale erfassen.

In dieser Ausführung kann eine Triggereinheit 5 vorgesehen sein, welche die Messwertaufnehmer 3a,..3n triggert, die Signale S1,..,Sn in aufeinanderfolgenden Zeitbereichen zu erfassen.

Die Triggereinheit 5 löst somit beispielsweise das Erzeugen von den Signalen S1,...,Sn in den vorhandenen Messwertaufnehmer 3a,..,3n aus. Das Triggersignal aktiviert damit den/die vorhandenen Messwertaufnehmer 3a,..,3n.

In anderen Ausführungen kann der/die Messwertaufnehmer 3a,..3n dazu ausgebildet sein, periodisch oder kontinuierlich Signale zu erfassen.

Ferner weist die Ausführung in FIG 4 eine Aggregiereinheit 6 auf, zum Aggregieren der während des vorab definierten Zeitbereichs ermittelten Kennwerte K1,..,Kn als Kennwerttupel. Die Aggregiereinheit 6 wartet, bis jeder Messwertaufnehmer 3a,..3n bzw. jede Signalaufbereitung 4a,...,4n einen Kennwert K1,..,Kn geliefert hat, und reicht diese dann aggregiert als Kennwerttupel weiter. Dabei kann je nach Kennwert K1,..,Kn die Zeitdauer zwischen Triggern und fertigem Kennwert K1,...,Kn sehr unterschiedlich sein, aufgrund beispielsweise unterschiedlicher Einschwingdauern und unterschiedlicher Länge eines jeweils benötigten Aufnahmeintervalls.

In weiterer Ausgestaltung wird das Kennwerttupel durch eine oder mehrere Interpolationsfunktionen eindeutig auf einen Skalarwert abgebildet.

Für die Abbildung des Kennwerttupels auf einen gemeinsamen eindeutigen, zeitabhängigen Skalarwert in dem vorab festgelegten Skalarbereich durch zumindest eine Interpolationsfunktion weist die Überwachungsvorrichtung 1 zur Durchführung, wie normalerweise üblich, ein Rechenmodul/Prozessor (nicht gezeigt) oder ähnliche Hardware auf.

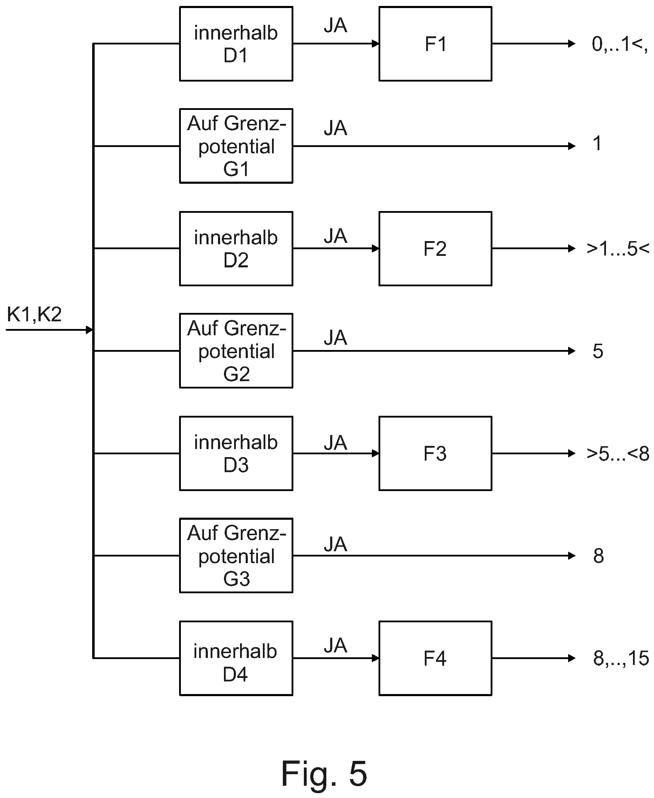

FIG 5 zeigt schematisch eine Abbildung der zumindest beiden Kennwerte K1 und K2 auf einen eindeutigen, zeitabhängigen Skalarwert durch Interpolationsfunktionen. In einer Ausbildung sind für die unterschiedlichen Diagnosepartition D1,D2,D3,D4, wie sie beispielsweise FIG 3, zeigen unterschiedliche Interpolationsfunktionen F1,F2,F3,F4 vorgesehen.

Dabei wird zunächst geprüft, in welcher Diagnosepartition D1,D2,D3,D4 der Kennwerttupel K1,K2 liegt oder ob dieser auf einem der Grenzpotentiale G1,G2,G3 liegt. Für jede Diagnosepartition D1,D2,D3, D4 wird eine

Interpolationsfunktion F1,F2,F3,F4, welche die Kennwerte K1,K2 auf einen Skalarwert abbildet, verwendet. Diese Interpolationsfunktionen F1,F2,F3,F4 sind in einem Ausführungsbeispiel stetig und glatt. Ferner können in einer Ausführung innerhalb der Diagnosepartition D1,D2,D3,D4 die Interpolationsfunktionen F1,F2,F3,F4 entweder keine Extrema aufweisen oder alle Kennwerte K1,K2 auf denselben Skalarwert abbilden. In anderen Ausbildungen kann beispielsweise für mehrere der Diagnosepartitionen D1,D2,D3,D4 dieselbe Interpolationsfunktion verwendet werden.

So wird in diesem Beispiel das Kennwerttupel K1,K2 bei Vorliegen in der Diagnosepartition D1 auf einen Skalarwert zwischen 0 und 1 abgebildet mittels der Interpolationsfunktion F1. Dabei ist der Bereich 0 und 1 willkürlich gewählt und dient nur der Veranschaulichung.

Liegt das Kennwerttupel auf dem Grenzpotential G1, so wird der Kennwerttupel K1,K2 direkt auf den Skalar 1 abgebildet. Dabei ist der Skalarwert 1 hier willkürlich gewählt.

Liegt das Kennwerttupel K1,K2 in der Diagnosepartition D2, so wird der Kennwerttupel K1,K2 auf einen Skalarwert zwischen 1 und 5 abgebildet mittels der Interpolationsfunktion F2. Dabei ist der Bereich 1 und 5 willkürlich gewählt und dient nur der Veranschaulichung.

Liegt das Kennwerttupel K1,K2 auf dem Grenzpotential G2, so wird der Kennwerttupel K1,K2 direkt auf den Skalarwert 5 abgebildet. Dabei ist der Wert 5 hier willkürlich gewählt.

Liegt das Kennwerttupel K1,K2 in der Diagnosepartition D3, so wird der Kennwerttupel K1,K2 auf einen Skalarwert zwischen 5 und 8 abgebildet mittels der Interpolationsfunktion F3. Dabei ist der Bereich 5 und 8 willkürlich gewählt und dient nur der Veranschaulichung.

Liegt das Kennwerttupel K1,K2 auf dem Grenzpotential G3, so wird der Kennwerttupel K1,K2 direkt auf den Skalarwert 8 abgebildet. Dabei ist der Wert 8 hier willkürlich gewählt.

Liegt das Kennwerttupel K1,K2 in der Diagnosepartition D4, so wird der Kennwerttupel K1,K2 auf einen Skalarwert zwischen 8 und 15 abgebildet mittels der Interpolationsfunktion F4. Dabei ist der Bereich 8 und 15 willkürlich gewählt und dient nur der Veranschaulichung.

Dadurch können die einzelnen Skalarwerte ein approximatives Maß für den Abstand zu den entsprechenden Grenzpotentialen G1,G2,G3 angeben.

Es können dabei auch mehr als zwei Kennwerte umfasst sein.

Die jeweiligen Skalarwerte sind mit dem Zeitbereich als Zeitstempel verknüpft. FIG 6 zeigt für die Kennwerte K1= Effektivwert der Beschleunigung als quadratischen Mittelwert (root mean square) , und K2= zero-peak-Kennwert (0-zu-Spitze) eine solche Interpolationsfunktion F. Dabei gibt der Effektivwert der Beschleunigung an, welche Leistung ein Schwingungssignal aufweist und wird durch Bandpass-Filterung (z. B. auf 10 Hz - 1 kHz) erhalten, wobei auf die genaue Erläuterung verzichtet werden soll. Die beiden Kennwerte Effektivwert der Beschleunigung, zero-peak-Kennwert können somit einfach als Zeitreihe dargestellt werden und in Abhängigkeit von den Grenzpotentialen G1,G2,G3 beispielsweise dargestellt werden.

Dabei existieren nur Skalarwerte, die einer der Diagnosepartitionen D1,...,D4 oder einem Grenzpotential G1,G2,G3 zugeordnet sind.

FIG 7 zeigt eine weitere Ausgestaltung. Dabei sind jeweils einer der Diagnosepartition D1,D2,D3,D4 mehrere Potentiale Pot_a,Pot_b..,Pot_n mit dazwischenliegenden Teilpartitionen Part_a,..., Part_n zugeordnet, wobei jeweils einem Potential Pot_a, Pot_b.., Pot_n ein vorab festgelegter Skalarwert eindeutig zugeordnet ist. Dabei können die Teilpartitionen Part_a,..., Part_n als auch die Diagnosepartition D1,D2,D3,D4 so angeordnet sein, dass lediglich zwei Teilpartitionen Pot_a,Pot_b..,Pot_n oder zwei Diagnosepartitionen D1,D2,D3,D4 aneinandergrenzen. Ferner sollen vorteilhafterweise nur Diagnosepartitionen D1,D2,D3,D4 aufeinanderfolgender Zustände aneinandergrenzen. Dies kann auch auf die Teilpartitionen Part_a,..., Part_n übertragen werden.

Zudem kann jeder der Teilpartitionen Part_a,..., Part_n eine Interpolationsfunktion zugewiesen sein, oder mehrere Teilpartitionen Part_a,..., Part_n weisen eine gemeinsame Interpolationsfunktion auf. Die Kennwerte K1,K2, die auf einem Potential Pot_a,Pot_b..,Pot_n liegen, können dabei auf den, für diese Potentiale Pot_a,Pot_b..,Pot_n festgelegten Skalarwert abgebildet werden, ebenso wie die Kennwerte K1,K2, welche auf einem Grenzpotential G1, G2,G3 liegen, auf den dafür festgelegten Skalarwert abgebildet werden.

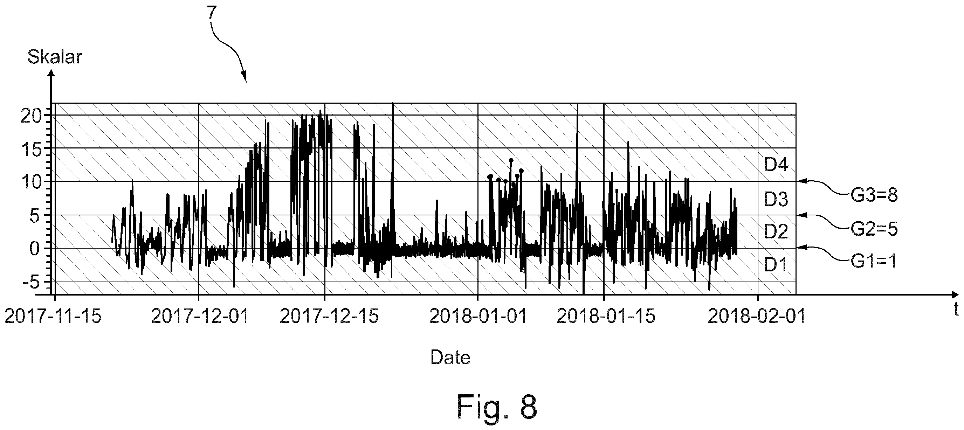

FIG 8 zeigt als ein Diagramm 7 die Kennwerte K1,K2 als zeitabhängige Skalarwerte in Abhängigkeit von den Grenzpotentialen G1,G2,G3 mit den Diagnosepartitionen D1,D2,D3,D4, aufgetragen über die Zeit t, wobei die Diagnosepartitionen D1,D2,D3,D4 in diesem Beispiel aufeinanderfolgende Zustände, nämlich Fehlmessung, Gutzustand, Warnzustand und Alarmzustand, darstellen.

Dadurch kann eine zeitabhängige Überwachung von den zumindest zwei Kennwerten K1,K2 erfolgen. Ebenfalls kann die Überwachungsvorrichtung 1 für mehrere Kennwerte K1,..,Kn herangezogen werden.

Die Kombination mehrerer Kennwerte erlaubt eine zuverlässigere Beurteilung gegenüber der Verwendung eines einzelnen Kennwerts; insbesondere können auch Schwingungen von Bauteilen überwacht werden, welche sich nur durch mehrere Kennwerte beschreiben lassen.

Durch eine Beurteilung der zeitlichen Verläufe der Skalarwerte kann beispielsweise eine Abschätzung, wann ein Lager ausfallen kann, getroffen werden.

Das Diagramm 7 kann als eine stetige Abbildung der Kenngrößen auf einen Skalarwert angesehen werden, welcher die zeitliche Entwicklung des Diagnosezustands der industriellen Maschine 2 darstellt. So wird jedem Ort in dem mehrdimensionalen Diagramm 7 ein Skalarwert zugeordnet. Dieser Wert kann dann zum Trenden verwendet werden. Dabei wird beim Trenden die Rate untersucht, mit der sich die Schwingungswerte mit der Betriebszeit ändern.

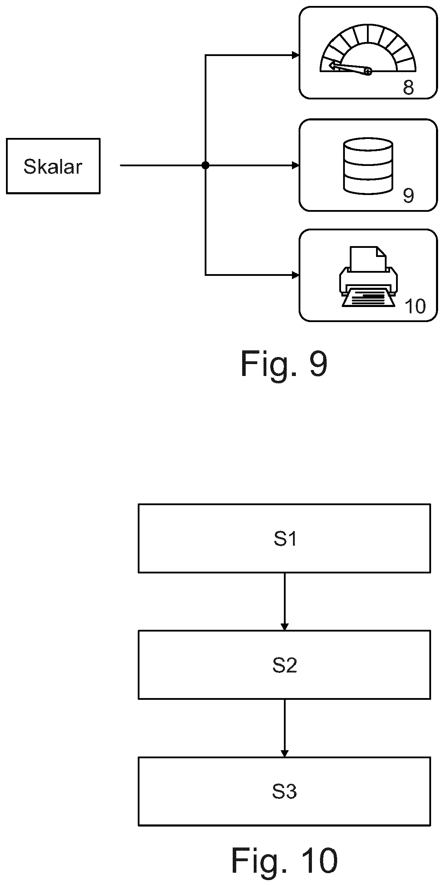

FIG 9 zeigt weitere Anwendungsmöglichkeiten des so ermittelten Skalars, welcher von zwei oder mehreren Kennwerten gebildet wird. So kann dieser in eine Signaleinrichtung 8 eingegeben werden, welche beispielsweise rechtzeitig eine Warnung ausgibt, und/oder in einer Datenbank 9 oder Protokolliereinrichtung 10 gespeichert werden, um eine langjährige Überwachung zu ermöglichen.

FIG 10 zeigt das Überwachungsverfahren zur Erfassung eines Diagnosezustands einer industriellen Maschine 2 anhand von Schwingungen, die der industriellen Maschine 2 zugeordnet sind, schematisch.

Dabei werden in einem Schritt S1 von einem oder mehreren Messwertaufnehmern 3a,..3n zwei oder mehrere Signale S1,..,Sn in einem Zeitbereich erfasst und in einem zweiten Schritt S2 von einer Signalaufbereitung 4a,..4n in zwei oder mehrere Kennwerte K1,..,Kn umgewandelt.

Anschließend werden diese Kennwerte K1,..Kn als Kennwerttupel in einem Schritt S3 durch ein oder mehrere Interpolationsfunktionen auf Skalarwerte abgebildet, so dass durch den zeitabhängigen Skalarwert eine zeitliche Überwachung des Diagnosezustandes der industriellen Maschine 2 bewerkstelligt wird.

### Bezugszeichen

- 1: Überwachungsvorrichtung
- 2: industrielle Maschine
- 3,3a,..3n: Messwertaufnehmer
- 4,4a,..,4n: Signalaufbereitung
- 5: Triggereinheit
- 6: Aggregiereinheit
- 7: Diagramm
- 8: Signaleinrichtung
- 9: Datenbank
- 10: Protokolliereinrichtung
- 11: Speichereinheit
- S1,...,Sn: Signale
- K1,...,Kn: Kennwerte
- D1,..,D4: Diagnosepartition
- F1,...,F4: Interpolationsfunktionen
- G1,G2,G3: Grenzpotentiale
- Part_a,,Part_n: Teilpartitionen
- Pot_a,..,Pot_n: Potentiale

## Patentansprüche

1. Überwachungsvorrichtung (1) zur Erfassung eines Diagnosezustands einer industriellen Maschine (2) anhand von Schwingungen, die der industriellen Maschine (2) zugeordnet sind, umfassend zumindest einen Messwertaufnehmer (3) zur Erfassung zumindest von einem die Schwingung der industriellen Maschine (2) charakterisierenden ersten Signal (S1) in einem Zeitbereich und zur Erfassung zumindest von einem die Schwingung der industriellen Maschine (2) charakterisierenden zweiten Signal (S2) in demselben Zeitbereich und wobei der zumindest eine Messwertaufnehmer (3) zumindest eine Signalaufbereitung (4) aufweist zur Auswertung des zumindest ersten Signals (S1) als einen ersten Kennwert (K1) und zur Auswertung des zumindest zweiten Signals (S2) als einen zweiten Kennwert (K2) und wobei der zumindest eine erste Kennwert (K1) und der zumindest eine zweite Kennwert (K2) einen Kennwerttupel bilden,
ferner aufweisend eine Speichereinheit, in welcher verschiedene, den Zustand der industriellen Maschine (2) beschreibende, Diagnosezustände gespeichert sind, wobei die Diagnosezustände in Abhängigkeit von dem Kennwerttupel festgelegt sind, sowie ein vorab definierter Skalarbereich gespeichert ist mit vorab festgelegten unterschiedlichen festen Skalarwerten, welche jeweils ein vorhandenes Grenzpotential (G1,G2,G3) definieren, wobei jeweils ein Grenzpotential (G1,G2,G3) einen Wechsel des Diagnosezustandes charakterisiert, und wobei zwischen benachbarten Grenzpotentialen (G1,G2,G3) eine Diagnosepartition (D1,D2,D3,D4) ausgebildet ist und wobei den unterschiedlichen Diagnosepartitionen (D1,D2,D3,D4) unterschiedliche Skalarwerte aus dem Skalarbereich zugeordnet sind und wobei jeweils unterschiedliche Diagnosepartitionen (D1,D2,D3,D4) unterschiedliche Diagnosezustände der industriellen Maschine (2) darstellen und wobei die Überwachungsvorrichtung (1) zumindest eine Interpolationsfunktion (F1,F2,F3,F4) zum Abbilden des Kennwerttupels auf einen gemeinsamen eindeutigen, zeitabhängigen Skalarwert in dem vorab festgelegten Skalarbereich aufweist, so dass durch den zeitabhängigen Skalarwert eine zeitliche Überwachung des Diagnosezustandes der industriellen Maschine (2) bewerkstelligt ist.

2. Überwachungsvorrichtung (1) nach Anspruch 1, **dadurch gekennzeichnet, dass** die jeweils angrenzende Diagnosepartitionen (D1,D2,D3,D4) bezüglich der Kritikalität aufeinanderfolgende Diagnosezustände der industriellen Maschine (2) darstellen und wobei die aufeinanderfolgenden Diagnosezustände zumindest in aufsteigender Reihenfolge als eine Fehlmessung, ein Gutzustand, ein Warnzustand und ein Alarmzustand ausgebildet sind.

3. Überwachungsvorrichtung (1) nach Anspruch 2, **dadurch gekennzeichnet, dass** die Werte der zeitabhängigen Skalarwerte bezüglich der Kritikalität der Zustandsreihenfolge zunehmen.

4. Überwachungsvorrichtung (1) nach einem der vorhergehenden Ansprüche, **dadurch gekennzeichnet, dass** die Überwachungsvorrichtung (1) ferner dazu ausgebildet ist, bei Vorliegen von zumindest einem Kennwerttupel, der einem Wechsel zwischen den Diagnosezuständen entspricht, den Kennwerttupel auf den entsprechenden, das zu dem Wechsel des Diagnosezustands gehörenden Grenzpotential (G1,G2,G3) eindeutigen Skalarwert abzubilden.

5. Überwachungsvorrichtung (1) nach Anspruch 4, **dadurch gekennzeichnet, dass** jeweils einer Diagnosepartition (D1,D2,D3,D4) mehrere Potentiale (Pot_a,..,Pot_n) mit dazwischenliegenden Teilpartitionen (Part_a,...,Part_n) zugeordnet sind, wobei jeweils ein Potential (Pot_a,..,Pot_n) einem vorab festgelegten Skalarwert eindeutig zugeordnet ist und wobei die Überwachungsvorrichtung (1) dazu ausgebildet ist, bei Vorliegen von zumindest einem Kennwerttupel, der einen Wechsel zwischen den Teilpartitionen (Part_a,...,Part_n) angibt, den Kennwerttupel auf den entsprechenden zu dem Wechsel gehörenden Potential (Pot_a,..,Pot_n) eindeutigen Skalarwert abzubilden.

6. Überwachungsvorrichtung (1) nach einem der vorhergehenden Ansprüche, **dadurch gekennzeichnet, dass** die Überwachungsvorrichtung (1) mehrere Interpolationsfunktionen (F1,F2,F3,F4) aufweist und ferner dazu ausgebildet ist die Interpolationsfunktion (F1,F2,F3,F4) in Abhängigkeit von dem Kennwerttupel zu wählen.

7. Überwachungsvorrichtung (1) nach Anspruch 6, **dadurch gekennzeichnet, dass** die Interpolationsfunktionen (F1,F2,F3,F4) den verschiedenen Diagnosepartitionen (D1,D2,D3,D4) zugeordnet sind, wobei die Überwachungsvorrichtung (1) ferner dazu ausgebildet ist, bei Vorliegen von zumindest einem Kennwerttupel, welcher innerhalb einer der Diagnosepartitionen (D1,D2,D3,D4) liegt, das Kennwerttupel durch die der Diagnosepartition (D1,D2,D3,D4) zugeordnete Interpolationsfunktion (F1,F2,F3,F4) auf den eindeutigen Skalarwert abzubilden.

8. Überwachungsvorrichtung (1) nach Anspruch 7, **dadurch gekennzeichnet, dass** jeweils einer Diagnosepartition (D1,D2,D3,D4) mehrere Potentiale (Pot_a,..,Pot_n) mit dazwischenliegenden Teilpartitionen (Part_a,...,Part_n) zugeordnet sind, wobei die Interpolationsfunktionen (F1,F2,F3,F4) den verschiedenen Teilpartitionen (Part_a,...,Part_n) zugeordnet sind, wobei die Überwachungsvorrichtung (1) ferner dazu ausgebildet ist, bei Vorliegen von zumindest einem Kennwerttupel, welcher innerhalb einer der Teilpartitionen (Part_a,...,Part_n) liegt, das Kennwerttupel durch die der Teilpartition (Part_a,...,Part_n) zugeordneten Interpolationsfunktion (F1,F2,F3,F4) auf den eindeutigen Skalarwert abzubilden.

9. Überwachungsvorrichtung (1) nach einem der vorhergehenden Ansprüche, **dadurch gekennzeichnet, dass** eine Aggregiereinheit (6) vorgesehen ist zum Aggregieren des während des vorab definierten Zeitbereich ermittelten ersten Kennwerts (K1) und zweiten Kennwerts (K2) als Kennwerttupel und Koppeln des Kennwerttupels an den Zeitbereich.

10. Überwachungsvorrichtung (1) nach einem der vorhergehenden Ansprüche, **dadurch gekennzeichnet, dass** der zumindest eine Messwertaufnehmer (3) dazu ausgebildet ist, periodisch zumindest ein erstes Signal (S1) und ein zweites Signal (S2) zu aufeinanderfolgenden Zeitbereichen zu erzeugen.

11. Überwachungsvorrichtung (1) nach einem der Ansprüche 1 bis 9, **dadurch gekennzeichnet, dass** eine Triggereinheit (5) vorgesehen ist, welche den zumindest einen Messwertaufnehmer (3) triggert, um zumindest das erste Signal (S1) und zumindest das zweite Signal (S2) in aufeinanderfolgenden Zeitbereichen zu erzeugen.

12. Überwachungsvorrichtung (1) nach einem der vorhergehenden Ansprüche, **dadurch gekennzeichnet, dass** der zumindest eine Messwertaufnehmer (3) ein piezoelektrischer Schwingungsaufnehmer ist.

13. Überwachungsvorrichtung (1) nach einem der vorhergehenden Ansprüche, **dadurch gekennzeichnet, dass** mehrere Messwertaufnehmer (3a,..,3n) mit jeweils einer Signalaufbereitung (4a,..,4n) vorgesehen sind zur Erfassung zumindest von einem die Schwingung der industriellen Maschine (2) charakterisierenden ersten Signal (S1) und zweiten Signal (S2).

14. Überwachungsvorrichtung (1) nach einem der vorhergehenden Ansprüche, **dadurch gekennzeichnet, dass** der zumindest eine Messwertaufnehmer (3) zur Erfassung von einem die Schwingung der industriellen Maschine (2) charakterisierenden ersten Signal (S1) und zweiten Signal (S2) sowie zur Erfassung von weiteren, die Schwingung der industriellen Maschine (2) charakterisierenden Signalen (S3,..,Sn) und zur Auswertung in mehrere Kennwerte (K1,..,Kn) ausgebildet ist.

15. Überwachungsverfahren zur Erfassung eines Diagnosezustands einer industriellen Maschine (2) anhand von Schwingungen, die der industriellen Maschine (2) zugeordnet sind, wobei zumindest ein Messwertaufnehmer (3) zur Erfassung zumindest von einem die Schwingung der industriellen Maschine (2) charakterisierenden ersten Signal (S1) in einem Zeitbereich und zur Erfassung zumindest von einem die Schwingung der industriellen Maschine (2) charakterisierenden zweiten Signal (S2) in demselben Zeitbereich bereitgestellt wird und wobei der zumindest eine Messwertaufnehmer (3) zumindest eine Signalaufbereitung (4) aufweist zur Auswertung des zumindest ersten Signals (S1) als einen ersten Kennwert (K1) und zur Auswertung des zumindest zweiten Signals (S2) als einen zweiten Kennwert (K2) und wobei der zumindest eine erste Kennwert (K1) und der zumindest eine zweite Kennwert (K2) einen Kennwerttupel bilden,
wobei ferner eine Speichereinheit (11) bereitgestellt wird, in welcher verschiedene, den Zustand der industriellen Maschine (2) beschreibende, Diagnosezustände gespeichert sind, wobei die Diagnosezustände in Abhängigkeit von dem Kennwerttupel festgelegt sind, sowie ein vorab definierter Skalarbereich gespeichert ist mit vorab festgelegten unterschiedlichen festen Skalarwerten, welche jeweils ein vorhandenes Grenzpotential (G1,G2,G3) definieren, wobei jeweils ein Grenzpotential (G1,G2,G3) einen Wechsel des Diagnosezustandes charakterisiert, und wobei zwischen benachbarten Grenzpotentialen (G1,G2,G3) eine Diagnosepartition (D1,D2,D3,D4) ausgebildet ist und wobei den unterschiedlichen Diagnosepartitionen (D1,D2,D3,D4) unterschiedliche Skalarwerte aus dem Skalarbereich zugeordnet sind und wobei jeweils unterschiedliche Diagnosepartitionen (D1,D2,D3,D4) unterschiedliche Diagnosezustände der industriellen Maschine (2) darstellen und wobei anhand zumindest einer Interpolationsfunktion (F1,F2,F3,F4) ein Abbilden des Kennwerttupels auf einen gemeinsamen eindeutigen, zeitabhängigen Skalarwert in dem vorab festgelegten Skalarbereich bewerkstelligt wird, so dass durch den zeitabhängigen Skalarwert eine zeitliche Überwachung des Diagnosezustandes der industriellen Maschine (2) bewerkstelligt wird.
